# NEW EUROPEAN PATENT SPECIFICATION

(11) **EP 0 150 847 B2**
(45) Date of publication and mention of the opposition decision: **23.06.1993**
(45) Mention of the grant of the patent: 24.10.1990
(21) Application number: 85100945.6
(22) Date of filing: 30.01.1985
(51) Int. Cl.: H04N 1/10, G03B 27/73, H04N 1/00

(54) **Lighting control equipment**
Beleuchtungssteuerausstattung
Equipement de commande d'illumination

(30) Priority: 01.02.1984 JP 17844/84
(43) Date of publication of application: 07.08.1985
(73) Proprietor: SHARP KABUSHIKI KAISHA, Osaka 545 (JP)
(72) Inventor: Nagano, Fumikazu, Yamatokoriyama-shi Nara-ken (JP)
(74) Representative: Selting, Günther, Dipl.-Ing.

(56) References cited:
- DE-A- 3 420 359
- JP-A- 5 913 465
- US-A- 3 947 117
- US-A- 4 017 180
- US-A- 4 691 365
- XEROX DISCLOSURE JOURNAL, vol. 8, no. 6, November/December 1983, G. Wiggins "Broad Context Background Detector", pages 525, 526
- XEROX DISCLOSURE JOURNAL, vol. 6, no. 5, September/October 1981, J. Stoffel "A lensless Raster Input Scanner", pages 287, 288
- G. WIGGINS "Broad context background detector" Xerox Disclosure Journal, Vol. 8, No. 6, November/December 1983, pages 525-526
- C.TANDON, "A lensless raster input scanner", Xerox Disclosure Journal, Vol. 6, No. 5, September/October 1981, pages 287-289

## Description

The present invention relates to a lighting control equipment according to the preamble of claim 1.

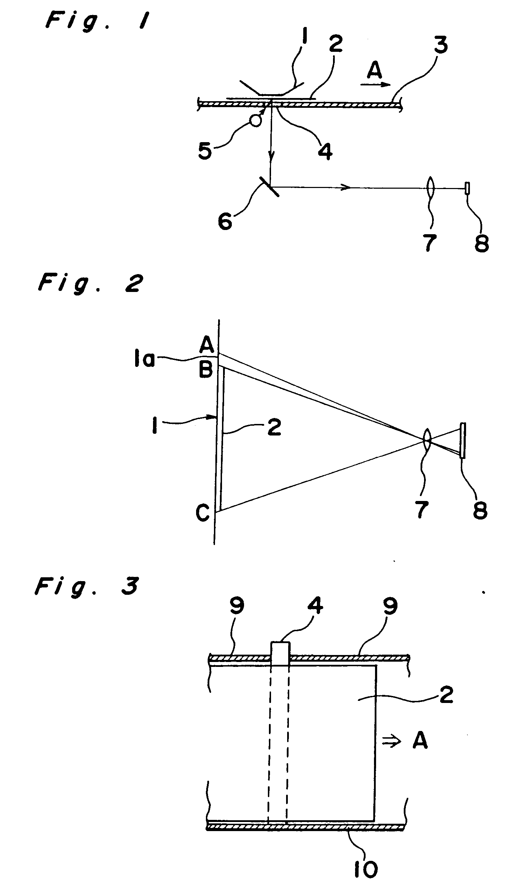

Such a lighting control equipment can be used in order to control the lighting of a source of light in apparatuses such as a half-tone facsimile, a color printer, an optical character reader (OCR) and a color scanner wherein a character, a figure or an image can be read out automatically. The optical system used for read-out in the apparatuses mentioned above is shown in Fig. 1. A manuscript 2 placed between a back plate 1 and a carrier plate 3 is exposed through light emitted from a fluorescent light 5 through a transparent window 4 of the carrier plate 3. Both back plate 1 and transparent window 4 extend over the manuscript 2 linearly in the direction perpendicular to the carriage direction A of a manuscript 2. The light having been reflected by the manuscript 2 is reflected by a mirror 6, passes through a focusing lens 7 and is detected by means of a photodetector, that is, a one-dimensional charge-coupled device (hereinafter referred to as CCD) 8. Each element of the CCD 9 transmits an electrical signal proportional to the intensity of the incident light to an output equipment such as a printer (not shown).

In a prior art optical system mentioned above, if the intensity of the lighting of the fluorescent light 5 changes due to variations of the voltage applied thereto or of the temperature thereof during a time needed to detect the brightness of a whole manuscript, the outputs of the CCD 8 are affected largely according to a change in light intensity. Then, for example, the output of an image becomes irregular between the first and last parts of the image or over the whole image, and deteriorates the quality of a print of the image.

From DE-A-34 20 359, an image reading apparatus is known in which the source of light is controlled depending on the output signal of the photodetector means when exposed by the light reflected from a white plate located prior to the manuscript to be read out. Controlling of the source of light is performed by controlling the lighting time of the source of light in each scan period. In order to achieve the necessary value of the lighting time, the white plate is scanned. The so achieved lighting time is set for scanning the manuscript. However, also in this known image reading apparatus the output of the photodetector means becomes irregular over the whole image since merely the brightness of the white plate, i.e. the brightness of the light reflected from the white plate before scanning the whole image to be read, is used for controlling the source of light. Therefore, the quality of a print of the image deteriorates.

A further image reading apparatus is known from JP-A-59-134 65. In this known apparatus, the signal of a white image portion received by an image pick-up device is compared with a reference signal by means of a comparator, and the lighting time for the light source is increased or decreased according to the result of a comparison. The lighting time for a scan period is controlled according to the image signal detected in the same scan period.

It is the object of the invention to provide a lighting control equipment according to the preamble of claim 1 in which the source of light is controlled so as to prevent the irregularity of the brightness due to the change in light intensity of the source of light.

According to the invention, this object is solved by a lighting control equipment provided with the features mentioned in claim 1. Preferred embodiments of the invention are disclosed in the subclaims.

In the lighting control equipment according to the invention, the light control means controls the lighting time of the source of light so as to keep constant the integrated light intensity of the source of light incident on the manuscript. Due to this kind of light control the read-out of an image does not fluctuate even if the light intensity of the source of light changes in a time needed for the read-out of an image. This prevents the brightness of the output of an image to become irregular so that the performance of a readout apparatus such as a facsimile can be improved largely.

A preferred embodiment of the invention will now be described in connection with the drawings, in which
Fig. 1 shows a schematic cross-section of a prior-art optical system,
Fig. 2 shows a schematic cross-section of an optical system according to an embodiment of the present invention,
Fig. 3 shows a schematic plan view of an optical system of an embodiment of the present invention,
Fig. 4 shows a block diagram of a lighting control circuit,
Fig. 5 shows a block diagram of the control circuit shown in Fig. 4,
Fig. 6 shows a timing chart of signals (!>T, To, T_{GATE} and the output of CCD, and
Fig. 7 shows a time chart of signals V₂, V₄ and T₂.

Fig. 2 shows an optical system for the read-out according to an embodiment of the present invention. A manuscript 2 is placed in front of a back plate 1, and the light from the manuscript 2 is projected through a lens 7 on a one-dimensional CCD 8. As shown in Fig. 2, the optical system is so arranged that the light not only from manuscript area (BC) but also from a monitor area 1a (AB) of the back plate 1 are projected on the CCD 8. The CCD 8 has 2048 elements, and the light from the white area AB is incident on from the first to the 128-th elements of the CCD 8 while that from the manuscript is incident on the other elements.

Fig. 3 shows a top plan view of the optical system. A manuscript 2 is placed between a left carrier guide 9 and a right one 10, and is carried along the direction of the arrow A. Both back plate 1 and transparent window 4 are extended over the left carrier guide 9, and the manuscript 2 is prevented by the carrier guides 9, 10 from passing the monitor area 1 a, that is, the extended area of the back plate 1. Then, the brightness of the monitor area 1a can be monitored constantly through the transparent window 4 by the CCD 8.

The fluorescent light 5 is lighted during an interval T_{FL} per each scan period, and the lighting interval T_{FL} is adjusted according to the detected brightness of the white monitor area 1a of the back plate 1. The light from the manuscript 2 and the white monitor area 1a is sensed by 2048 elements of the sensor part of the CCD 8 during T_{FL}, and then the detected video signals are transferred to the memory part of the CCD 8 and are read out from the memory part successively. The lighting interval T_{FL} of the fluorescent light 5 is adjusted according to the video signal V₁ of the white monitor area 1 a detected lastly so as to keep the detected signal V₁ constant, as will be explained below.

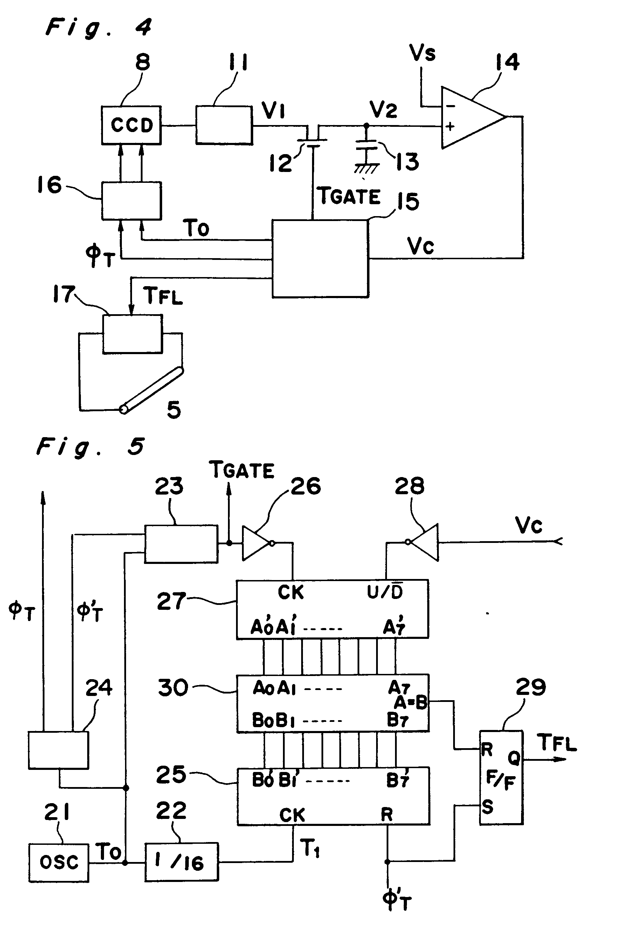

Fig. 4 shows a lighting control circuit which controls the lighting time T_{FL} of the fluorescent light 5 according to the detected video signal of the monitor area 1a. The detected video signals are amplified successively by a CCD amplifier 11. The amplified signal V₁ is applied through an analog switch 12 to the + input terminal of a comparator 14. A capacitor 13 is connected between the + input terminal and the earth and averages the input signal V₁. The analog switch 12 for the sample-hold is switched by a control circuit 15. The comparator 14 compares the input voltage V₂ at the + input terminal and the slice voltage Vₛ applied to the - input terminal, and the output voltage V is applied to an input terminal of the control circuit 15. The slice voltage Vₛ is a predetermined voltage to be compared with V₂. The control circuit 15 gives a sample-hold signal T_{GATE} to the analog switch 12. It also gives timing pulses To and φ_{T} to the CCD 8 through a CCD driver 16 where To is a fundamental pulse which can be used for the output of the video signal of each 2048 elements of the CCD 8 and φ_{T} is a pulse generated once per4096 To pulses at the start of each scan period. The control circuit 15 provides the interval T_{FL} during which the fluorescent light 5 should be lighted to a lighting circuit 17 of the fluorescent light 5.

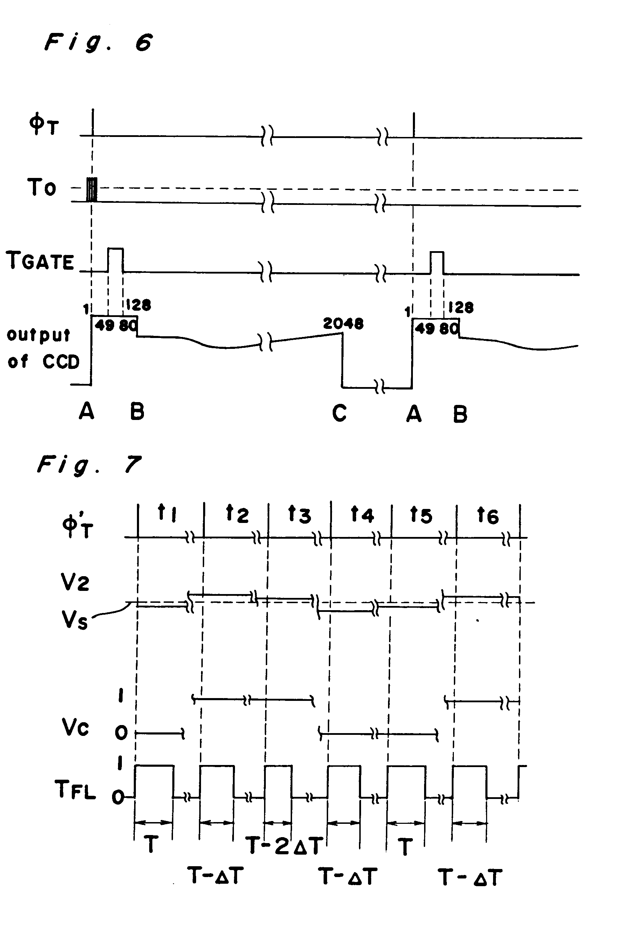

Fig. 5 shows the circuit diagram of the control circuit 15. An oscillator 21 gives clock pulses To to a 1/16 divider 22, a timing control circuit 23 and a timing pulse generator 24. The timing pulse generator 24 generates pulses φ_{T} and φ_{T}' per 4096 To pulses, and applies them to the CCD driver 16 and to the timing control circuit 23, respectively. After a pulse φ_{T} is generated the video signals of the 2048 elements of the CCD 8 are all read out, as will be explained later. The output T₁ of the 1/16 divider 22 is connected to the count input CK of an up counter 25, while the output of the timing control circuit 23 is connected both to the analog switch 12 and through an inverter 26 to the count input CK of an up/down counter 27. The output T_{GATE} makes the video signal V₁ pass through the analog switch 13, during a scan of the white monitor area 1 a say between the 49-th and 80-th element of the CCD 8. The output of the comparator 14 is connected through an inverter 28 to the up/down count input terminal V/D of the up/ down counter 27. According as the input voltage V₂ is larger or smaller than Vₛ, the up/down counter 27 counts down or up at the negative edge of T_{GATE}. The pulse φ_{T}' is applied to the reset terminal R of the up counter 25, and to the set terminal S of a flip flop 29. The 8-bit output terminals Aₒ', A₁', ..., A₇' of the up/down counter 27 and the 8-bit output terminals Bₒ', B₁',..., B₇' of the counter 25 are connected to the input terminals Aₒ, A_{1'} ..., A₇ and Bₒ, B_{1'} ..., B₇ of a digital comparator 30, respectively. The A=B output terminal of the digital comparator 30 is connected to the reset terminal R of the flip flop 29. The output terminal Q of the flip flop 29 gives a pulse T_{FL} to the lighting circuit 17, and the fluorescent light 5 is lighted when T_{FL}=1. The lighting time of the fluorescent light 5, that is, the period when T_{FL}=1, is equal to nxΔT where n is an integer, and AT=16xtₒ where to is the period of the count up pulse T₁. The lighting time of the fluorescent light can be controlled by unit of AT in the circuit shown in Fig. 4.

Fig. 6 shows a timing chart of φ_{T}, To, T_{GATE} and the output of CCD 8. The read-out of 2048 elements of CCD 8 is triggered by a pulse φ_{T}. Then, the output of the video signal of each element is read out successively at each To pulse. As mentioned above, the first to 128-th elements are arranged corresponding to the white monitor area 1a, and the video signal from the 129-th to 2048-th elements corresponding to a manuscript 2. Asample-hold pulse T_{GATE} becomes high and the analog switch 12 is switched on during a period corresponding to from the 49-th to the 80-th elements. Then, the video signal V₁ is transmitted to the + input terminal of the comparator 14, and is holded as V₂ at the negative edge of T_{GATE}. After the whole 2048 elements are read out the CCD 8 is lighted with the fluorescent light 5 after a pulse φ_{T}' during an adjusted time T_{FL} which is made shorter or longer by AT according as the brightness (V₂) of the monitor area 1a is higher or lower than the predetermined reference brightness (Vₛ).

When electric power is turned on, the lighting time approaches to an appropriate value as follows. The output of the up/down counter 27 is 0 when electric power is turned on. Then, the up counter 25 is reset with a pulse φ_{T}', and the flip flop 29 is set with the same φ_{T}', and its signal at the output terminal Q becomes 1. Thus, the fluorescent light 5 is turned on. However, the output of the A=B terminal becomes 1 instantly so that T_{FL} also becomes 0. Thus, the fluorescent light 5 lights only in a very short period. Next, the video signals of the CCD 8 is read out. Because the lighting time is very short, V₂ is smaller than Vₛ, and V_{c} is 0. Then, the up/down counter 27 is counted up by one at the negative edge of T_{GATE}. Thus, the lighting time becomes AT in the following period. Similar processes are repeated till the brightness of the white monitor area 1a increases up to an appropriate value before a scan of a manuscript begins. After it attains to an appropriate value, the lighting time can be adjusted, for example, as shown in Fig. 7.

Fig. 7 shows an example of the control of the lighting time of the fluorescent light 5. Each period t₁, t₂, ... begins with each φ_{T}' pulse. Then, the output V_{c} of the comparator 14 becomes high or low accordingly as V₂ is larger or smaller than the reference voltages Vₛ, and the lighting time is decreased or increased by AT from that of the last period according as the output V_{c} of the comparator 14 is high or low. For example, in the period t₂, the white monitor area 1a is brighter than the reference brightness, that is, V₂>V₃, and the lighting time is allowed to decrease by AT from the value T of the last period t₁.

In the next period t₃, the white monitor area 1a is brighter again than the reference brightness, that is, V₂>V₃, and the lighting time is allowed to decrease again by AT from the value T-AT of the last period t₂. In the next period t₄, the white monitor area 1a becomes brighter than the reference brightness, that is, V₂<V₃, and the lighting time is allowed to increase by AT from the value T-2AT of the last period t₃. Similar processes are repeated. Thus, the fluctuation of the lighting intensity of the fluorescent light 5 integrated during a lighting time can be limited within a predetermined range by controlling the lighting time and the brightness of the white monitor area 1a detected by the CCD can be controlled within a predetermined fluctuation range. Then, the integrated light intensity of the fluorescent light 5 incident on the manuscript can be kept constant, the video signal of the manuscript becomes uniform. In other words, the brightness of the white monitor area 1a of the back plate 1 is used to adjust the lighting time of the fluorescent light in order to get uniform output of the video signal of CCD. When the optical system mentioned above is used in the read-out equipment of such apparatuses as color scanner, facsimile, color copier and OCR, the fluctuation of the output of the read-out due to that of the lighting intensity of the fluorescent light decreases so that the brightness of a print can be kept uniform and the quality of a print can be improved.

This invention may be practiced or embodied in still other ways without departing from the spirit or essential character thereof. For instance, the brightness of the white monitor area 1a can be read-out at the end of each scan. Also, thre sources of light of three primary colors of red, green and blue can be controlled in an optical system of apparatuses such as a color scanner and a color copier. The preferred embodiment described herein is therefore illustrative and not restrictive, the scope of the invention being indicated by the appended claims and all variations which come within the meaning of the claims are intended to be embraced therein.

## Claims

1. A lighting control equipment, comprising
- a back plate (1) having a manuscript area (BC), on which a manuscript (2) can be applied, and a monitor area (1a;AB) outside said manuscript area (BC),
- a source of light (5) which lightens said manuscript (2) and said monitor area (1a;AB),
- a photodetector means (8) for detecting brightness of the light reflected from said manuscript (2) on said monitor area (1a;AB), and
- a light control means (14,15) for controlling the lighting time (T_{FL}) of said source of light (5) in each scan period, said light control means (14,15) comprising a comparator means (14) for comparing the brightness (V₂) of said monitor area (1a) and a predetermined reference brightness (Vₛ), and a control means (15) for decreasing or increasing the lighting time (T_{FL}*), according to whether the brightness (V₂) of said monitor area (1a;AB) is higher or lower than the reference brightness (Vₛ) as shown by the output (V_{c}) of said comparator means (14),
characterized in that
- said comparator means (14) compares the brightness (V₂) of said monitor area (1a) and the predetermined reference brightness (Vₛ) each time the brightness (V₂) of said monitor area (1a) for a scan period is received from said photodetector means (8), and
- said control means (15) decreases or increases the lighting time (T_{FL}) for a scan period by a predetermined fixed difference (AT) relative to the lighting time for the respective previous scan period according to whether the brightness (V₂) of said monitor area (1a;AB) is higher or lower than the reference brightness (Vₛ) whereby the integrated light intensity of said source of light (5) incident on said manuscript (2) is kept constant.

2. Lighting control equipment according to claim 1 characterized in that said monitor area (1a) is white.

3. Lighting control equipment according to claim 1 or 2 characterized in that said source of light (1) is fluorescent light.

4. Lighting control equipment according to any of claims 1 to 3 characterized in that said photodetector means (8) is a charge-coupled device having a plurality of elements.

## Patentansprüche

1. Belichtungssteuerungsvorrichtung mit
- einer Rückplatte (1) mit einem Manuskriptbereich (BC), aufweichen ein Manuskript (2) aufbringbar ist, und einem Monitorbereich (1a;AB) außerhalb des Manuskriptbereichs (BC),
- einer Lichtquelle (5), die das Manuskript (2) und den Monitorbereich (1a; AB) belichtet,
- einer Photodetektoreinrichtung (8) zum Messen der Helligkeit des von dem Manuskript (2) auf dem Monitorbereich (1a; AB) reflektierten Lichtes, und
- einer Belichtungssteuerungseinrichtung (14,15) zum Steuern der Belichtungszeit (T_{FL}) der Lichtquelle (5) in jeder Abtastperiode, wobei die Belichtungssteuerungseinrichtung (14, 15) eine Vergleichseinrichtung (14), welche die Helligkeit (V₂) des Monitorbereichs (1a) mit einer vorbestimmten Referenzhelligkeit (Vₛ) vergleicht, und eine Steuereinrichtung (15) aufweist, welche die Belichtungszeit (T_{FL}) verringert oder erhöht, und zwar in Abhängigkeit davon, ob die Helligkeit (V₂) des Monitorbereichs (1a;AB) größer oder geringer als die Referenzhelligkeit (Vₛ) ist, was durch das Ausgangssignal (V_{c}) der Vergleichseinrichtung (14) angegeben ist,
dadurch gekennzeichnet, daß
- die Vergleichseinrichtung (14) die Helligkeit (V₂) des Monitorbereichs (1a) und die vorbestimmte Referenzhelligkeit (Vₛ) jedes Mal vergleicht, wenn die Helligkeit (V₂) des Monitorbereichs (1a) für eine Abtastperiode von der Photodetektoreinrichtung (8) empfangen wird, und
- die Steuereinrichtung (15) die Belichtungszeit (T_{FL}) für eine Abtastperiode um eine vorbestimmte feste Differenz (AT) relativ zur Belichtungszeit der jeweils vorhergehenden Abtastperiode in Abhängigkeit davon verlängert oder verkürzt, ob die Helligkeit (V₂) des Monitorbereichs (1a; AB) größer oder geringer ist als die Referenzhelligkeit (Vₛ), wodurch die auf das Manuskript einfallende integrierte Lichtintensität der Lichtquelle (5) konstant gehalten wird.

2. Belichtungssteuerungsvorrichtung nach Anspruch 1, dadurch gekennzeichnet, daß der Monitorbereich (1a) weiß ist.

3. Belichtungssteuerungsvorrichtung nach Anspruch 1 oder 2, dadurch gekennzeichnet, daß die Lichtquelle (5) fluoreszierendes Licht ist.

4. Belichtungssteuerungsvorrichtung nach einem der Ansprüche 1 bis 3, dadurch gekennzeichnet, daß die Photodetektoreinrichtung (8) eine lastgekoppelte Vorrichtung mit mehreren Elementen ist.

## Revendications

1. Equipement de commande d'illumination, comprenant :
- une plaque d'appui (1) possédant une aire de manuscrit (BC), sur laquelle un manuscrit (2) peut être appliqué, et une aire de contrôle (1a ; AB) extérieure à ladite aire de manuscrit (BC),
- une source de lumière (5) qui éclaire ledit manuscrit (2) et ladite aire de contrôle (1a ; AB),
- un moyen photodétecteur (8) servant à déterminer l'intensité de la lumière réfléchie par ledit manuscrit (2) sur ladite aire de contrôle (1a ; AB), et
- un moyen de commande de lumière (14, 15) servant à commander la durée d'illumination (T_{FL}) de la source de lumière (5) pendant chaque période de balayage, ledit moyen de commande de lumière (14, 15) comprenant un moyen comparateur (14) qui compare la luminance (V₂) de ladite aire de contrôle (1a) et une luminance de référence prédéterminée (Vₛ), et un moyen de commande (15) qui diminue ou augmente la durée d'illumination (T_{FL}) selon que la luminance (V_{Z}) de ladite aire de contrôle (1 a ; AB) est supérieure ou inférieure à la luminance de référence (V_{S}), comme indiqué par le signal de sortie (V_{c}) dudit moyen comparateur (14) ;
caractérisé en ce que :
- ledit moyen comparateur (14) compare la luminance (V₂) de ladite aire de contrôle (1 a) et la luminance de référence prédéterminée (Vₛ) à chaque fois que la luminance (V₂) de ladite aire de contrôle (1a) relative à une période de balayage est reçue de la part dudit moyen photodétecteur (8), et
- ledit moyen de commande (15) diminue ou augmente la durée d'illumination (T_{FL}) relative à une période de balayage d'une différence fixe prédéterminée (AT) par rapport à la durée d'illumination relative à la période de balayage précédente respective selon que la luminance (V₂) de ladite aire de contrôle (1a ; AB) est supérieure ou inférieure à la luminance de référence (Vₛ), si bien que l'intensité lumineuse intégrée de ladite source de lumière (5) arrivant sur ledit manuscrit (2) est maintenue constante.

2. Equipement de commande d'illumination selon la revendication 1, caractérisé en ce que ladite aire de contrôle (1a) est blanche.

3. Equipement de commande d'illumination selon la revendication 1 ou 2, caractérisé en ce que ladite source de lumière (5) est une lampe luminescente.

4. Equipement de commande d'illumination selon l'une quelconque des revendications 1 à 3, caractérisé en ce que ledit moyen photodétecteur (8) est un dispositif à couplage de charge possédant plusieurs éléments.
